# DEMANDE DE BREVET EUROPEEN

(11) **EP 4 651 044 A1**
(43) Date de publication de la demande: **19.11.2025**
(21) Numéro de dépôt: 25176659.8
(22) Date de dépôt: 15.05.2025
(51) Int. Cl.: G06Q 10/00, G01D 4/00, G06Q 20/08, G06Q 20/28, G06Q 50/06, G07F 15/00, G07F 15/06, H04Q 9/00

(54) **DISPOSITIF COMPTEUR DANS UN RESEAU DE DISTRIBUTION D'UNE RESSOURCE PREPAYEE ET METHODE MISE EN OEUVRE PAR LE DISPOSITIF**

(30) Priorité: 16.05.2024 FR 2405004
(71) Demandeur: SAGEMCOM ENERGY & TELECOM SAS, 92270 Bois-Colombes (FR)
(72) Inventeur: TEBOULLE, Henri, 92270 Bois-Colombes (FR)
(74) Mandataire: Novagraaf Technologies

(57) **Abrégé**

Est divulgué un dispositif compteur d'une information représentative d'une quantité de ressource consommée, le compteur donné comportant un organe de régulation pouvant avoir un parmi trois états (un premier état bloquant la consommation de la ressource, un second état autorisant la consommation de la ressource jusqu'à une première limite de débit; et un troisième état autorisant la consommation de la ressource jusqu'à une seconde limite de débit, la seconde limite étant strictement supérieure à zéro et strictement inférieure à la première limite) ; la vérification si un niveau de crédit est égal ou plus élevé que la quantité consommée; et si la vérification est négative et que l'organe de régulation du compteur donné est dans le second état, la transmission d'un message pour mettre l'organe de régulation dans le troisième état, la ressource étant de l'électricité, le débit étant une puissance et la première limite de débit étant une puissance souscrite auprès d'un fournisseur d'électricité, le processeur étant configuré pour, lorsque l'organe de régulation est dans le troisième état et qu'un débit de ressource consommée est supérieur à la seconde limite de débit, changer l'état de l'organe du troisième état vers le premier état.

## Description

### DOMAINE TECHNIQUE

Les différents exemples de réalisation décrits dans la présente divulgation concernent la gestion de compteurs dans un réseau de distribution d'une ressource prépayée, par exemple un réseau de distribution d'électricité, de gaz, d'eau, de chaleur, etc...

### ARRIERE PLAN

Il existe une passerelle pour distribution d'énergie en prépayé centralisant la consommation d'un ou plusieurs compteurs, comprenant la coupure d'alimentation d'un compteur en cas de dépassement de crédit.

Une temporisation avant une coupure peut être prévue, pour prendre en compte des problèmes de communication d'une recharge de crédit à la passerelle. En effet, la coupure peut avoir des conséquences néfastes.

Par exemple dans le cas d'un compteur électrique, la coupure de l'alimentation d'un équipement de sécurité ou encore d'un réfrigérateur pour le contenu duquel le maintien d'une température sous un seuil maximal est nécessaire peut entraîner une mise en danger d'une personne ou une perte de produits réfrigérés.

Il existe un besoin pour une méthode de gestion adaptée d'une ressource prépayée et des compteurs du réseau de distribution de cette ressource.

### RESUME

Un premier aspect de la présente divulgation concerne un dispositif compteur de consommation d'une ressource adapté à un réseau de distribution de la ressource avec prépaiement, le compteur comportant :
- un processeur ;
- un organe métrologique configuré pour compter la quantité consommée de la ressource ;
- un organe de régulation apte à être commandé pour avoir un parmi trois états, dont :
   - un premier état bloquant la consommation de la ressource,
   - un second état autorisant la consommation de la ressource jusqu'à une première limite de débit; et
   - un troisième état autorisant la consommation de la ressource jusqu'à une seconde limite de débit, la seconde limite étant supérieure à zéro et inférieure à la première limite ;
- une interface de communication configurée pour
   - transmettre une information représentative de la quantité consommée de la ressource ; et
   - recevoir un message de commande de l'état de l'organe de régulation ;
le processeur étant configuré pour changer l'état de l'organe de régulation en réponse au message reçu,
la ressource étant de l'électricité, le débit étant une puissance et la première limite de débit étant une puissance souscrite auprès d'un fournisseur d'électricité, le processeur étant configuré pour, lorsque l'organe de régulation est dans le troisième état et qu'un débit de ressource consommée est supérieur à la seconde limite de débit, changer l'état de l'organe du troisième état vers le premier état.

Selon un mode de réalisation, la transmission de l'information représentative de la quantité consommée de la ressource étant effectuée vers un autre dispositif, le message étant reçu de cet autre dispositif, l'autre dispositif étant l'un parmi un sous-répartiteur ou un concentrateur de données du réseau de distribution électrique.

Selon un mode de réalisation, le changement d'état de l'organe du troisième état vers le premier état étant effectif
- dès le dépassement de la seconde limite de puissance par la puissance instantanée consommée, ou
- après un certain temps passé par la puissance instantanée consommée au-dessus de la seconde limite de puissance.

Un second aspect de la présente divulgation concerne une méthode mise en œuvre par un dispositif compteur dans un réseau de distribution d'une ressource prépayée, le dispositif compteur comprenant :
- un processeur;
- un organe métrologique configuré pour compter la quantité consommée de la ressource ;
- un organe de régulation apte à être commandé pour avoir un parmi trois états, dont :
   - un premier état bloquant la consommation de la ressource,
   - un second état autorisant la consommation de la ressource jusqu'à une première limite de débit; et
   - un troisième état autorisant la consommation de la ressource jusqu'à une seconde limite de débit, la seconde limite étant supérieure à zéro et inférieure à la première limite ;
- une interface de communication adaptée à communiquer avec un dispositif de gestion de compteurs, la méthode comprenant :
- la transmission au dispositif de gestion de compteurs d'une information représentative de la quantité consommée de la ressource comptée par l'organe métrologique ;
- la réception d'une commande de l'état de l'organe de régulation de la part du dispositif de gestion de compteurs ;
- le changement de l'état de l'organe de régulation en réponse au message reçu, la ressource étant de l'électricité, le débit étant une puissance et la première limite de débit étant une puissance souscrite auprès d'un fournisseur d'électricité, la méthode comprenant en outre :
- lorsque l'organe de régulation est dans le troisième état et qu'un débit de ressource consommée est supérieur à la seconde limite de débit, un changement de l'état de l'organe du troisième état vers le premier état.

Selon un mode de réalisation, la transmission de l'information représentative de la quantité consommée de la ressource étant effectuée vers un autre dispositif, le message étant reçu de cet autre dispositif, l'autre dispositif étant l'un parmi un sous-répartiteur ou un concentrateur de données du réseau de distribution électrique.

Selon un mode de réalisation, le changement d'état de l'organe du troisième état vers le premier état étant effectif
- dès le dépassement de la seconde limite de puissance par la puissance instantanée consommée, ou
- après un certain temps passé par la puissance instantanée consommée au-dessus de la seconde limite de puissance.

Est également divulgué un produit programme d'ordinateur comportant des instructions qui lorsqu'elles sont exécutées par au moins un processeur causent la mise en œuvre d'une telle méthode.

Est également divulgué un support de stockage lisible par un ordinateur comportant des instructions qui lorsqu'elles sont exécutées par un processeur causent la mise en œuvre d'une telle méthode. Dans un mode de réalisation, le support de stockage est non transitoire.

Le dispositif compteur peut comprendre des moyens logiciels, c'est-à-dire des instructions destinées à être exécutées par un ensemble de circuits pour effectuer une ou plusieurs ou toutes les opérations ou étapes à réaliser par le compteur, en application des méthodes décrites dans la présente divulgation. L'ensemble de circuits peut comprendre une circuiterie dédiée. Il peut aussi comprendre un ou plusieurs processeurs et une ou plusieurs mémoires comprenant un ou plusieurs codes de programme informatique, lesdits processeurs, mémoires et codes informatiques étant configurés pour amener le compteur à exécuter une ou plusieurs ou toutes les étapes des méthodes décrites dans la présente divulgation.

### BREVE DESCRIPTION DES FIGURES

Les exemples de réalisation seront mieux compris à la lumière de la description détaillée qui va suivre et des dessins qui l'accompagnent, lesquels sont donnés à titre d'illustration uniquement et ne sont donc pas limitatifs de la présente divulgation.
La figure 1 est un schéma d'un exemple de réseau selon un ou plusieurs exemples de réalisation.
La figure 2 est un algorigramme d'une méthode selon un ou plusieurs exemples de réalisation.
La figure 3 est un algorigramme d'une méthode selon un ou plusieurs exemples de réalisation lorsque la ressource est l'énergie électrique.
La figure 4 est un schéma de blocs fonctionnels d'un dispositif pouvant être utilisé pour la mise en œuvre des méthodes décrites.

### DESCRIPTION DETAILLEE

Divers exemples de réalisation vont maintenant être décrits plus en détail, à titre d'exemples non limitatifs, en référence aux dessins qui accompagnent la présente divulgation et qui illustrent certains exemples de réalisation.

Les détails structurels et fonctionnels spécifiques décrits ici constituent des exemples non limitatifs. Les exemples de réalisation décrits ici peuvent faire l'objet de diverses modifications et formes alternatives. L'objet de la divulgation peut être réalisé sous de nombreuses formes différentes et ne doit pas être interprété comme étant limité aux seules réalisations présentées ici à titre d'exemples illustratifs. Il convient de comprendre qu'il n'y a aucune intention de limiter les modes de réalisation aux formes particulières décrites dans la suite de ce document.

La présente divulgation s'applique à tout réseau de distribution d'une ressource comportant au moins une tête de réseau et une pluralité de compteurs mesurant la consommation de ladite ressource. Il peut s'agir par exemple d'un réseau de distribution d'électricité, de gaz, d'eau, de chaleur, etc...

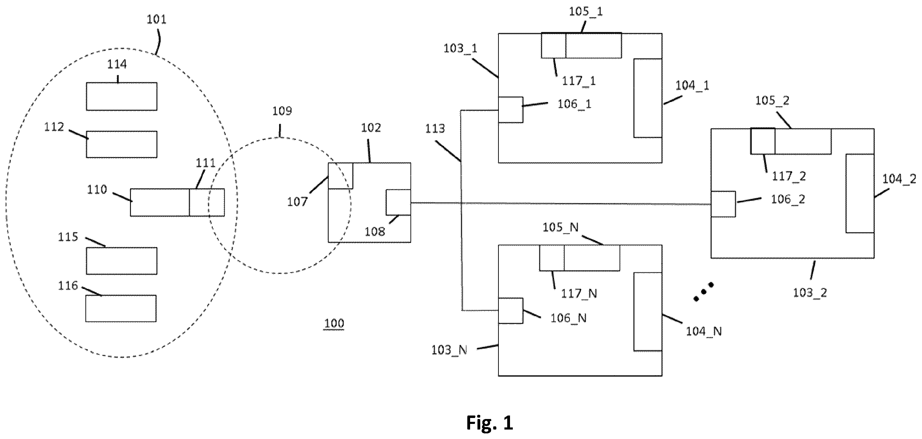

Dans l'exemple non limitatif de la FIG.1, un réseau de distribution 100 comporte au moins une tête de réseau 110 qui est configurée pour communiquer via au moins un dispositif 102 avec une pluralité de compteurs 103_K qui sont installés chez des clients, où K est un entier de 1 à N, où N est le nombre total de compteurs. Le dispositif 102 est par exemple un sous-répartiteur ou un concentrateur de données, communément utilisé dans certaines architectures de réseaux électriques.

La communication entre la tête de réseau 110 et le dispositif 102 peut se faire de diverses manières, par exemple via un réseau de télécommunication sans fil 109. Le réseau de communication sans fil 109 peut être un réseau GPRS, UMTS, LTE, 5G, ou un réseau à bande étroite IoT (de l'anglais 'Internet-of-Things', ou Internet des Objets en français). La tête de réseau 110 et le dispositif 102 sont munis d'interfaces de communication adaptées, respectivement référencées 111 et 107 dans FIG. 1.

Le dispositif 102 communique avec les compteurs 103_K. Cette communication peut également se faire de diverses manières, par exemple par courant porteur en ligne ('CPL') sur une infrastructure câblée existante tel le réseau électrique 113. Cette communication peut également se faire par d'autres moyens, notamment sans fil. Le dispositif 102 comporte une interface de communication adaptée 108, tandis que les compteurs comportent chacun une interface de communication correspondante 106_K. Un compteur 103_K installé chez un client donné est configuré pour mesurer une consommation, par chaque client, de la ressource qui est distribuée via le réseau de distribution 100. Par exemple, lorsque le réseau 100 est un réseau de distribution d'électricité, chaque compteur 103_K mesure une consommation d'électricité. Lorsque le réseau 100 est un réseau de distribution d'eau ou de gaz, les compteurs peuvent mesurer le volume de ressource consommé. La consommation est par exemple mesurée à l'aide d'un organe métrologique 104_K, produisant des valeurs d'index de consommation.

Les compteurs 103_K reliés au dispositif 102 sont configurés pour transmettre à ce dispositif des informations client représentatives de la consommation, sur base des informations produites par l'organe métrologique.

Ces informations peuvent être les différences entre index successifs sur un temps donné. Par exemple les compteurs 103_K transmettent tous les jours des informations représentatives de la consommation journalière. Ces informations client comportent par exemple une valeur de consommation par tranche de temps d'une durée déterminée, par exemple toutes les 15mn. Les valeurs transmises pour chaque tranche de temps de 15mn dans la journée permettent d'établir une courbe de charge d'un compteur pour la journée.

Une courte description non limitative d'un organe métrologique sera maintenant donnée. Un organe métrologique sert à mesurer principalement, avec une exigence de précision normative, les puissances demandées et les énergies (actives, réactives et apparentes) consommées typiquement par l'abonné derrière un compteur électrique. L'organe métrologique peut aussi servir à obtenir autres paramètres de mesures (fréquence réseau, tensions simples et composées en valeur efficace et courants en valeur efficace, déphasages des tensions, taux de distorsion harmonique...) et à remonter les mesures d'énergies d'une part à l'opérateur du réseau, d'autre part au client final (typiquement par affichage sur le compteur lui-même). La métrologie légale est la partie de la métrologie remontant les mesures permettant de facturer les clients.

Plusieurs structures sont possibles en pratique. On trouve principalement :
(a) Structure à deux microcontrôleurs, l'un intégrant la métrologie légale et l'autre la partie applicative du compteur. Cette structure permet, en gérant une étanchéité entre les deux microcontrôleurs, de faire en sorte que si le microcontrôleur de la partie applicative est hors service (par exemple suite à un problème logiciel), le microcontrôleur métrologie continue à mesurer et à afficher les résultats des mesures métrologiques.
(b) Structure à un seul microcontrôleur. Dans ce cas, le logiciel de la métrologie et celui de la partie applicative sont exécutés dans le même microcontrôleur. Ce dernier peut alors intégrer une sécurité permettant à la partie métrologique de continuer à fonctionner normalement même si par exemple le logiciel applicatif est bloqué.

Chaque compteur comporte par ailleurs un organe de régulation 105_K comprenant entre autres un composant de régulation proprement dit 117_K agissant directement sur le débit (par exemple : coupe-circuit, valve...). L'état de chaque organe de régulation est commandé par le dispositif 102, qui transmet des messages de commande aux compteurs pour modifier leur état. Selon la présente divulgation, un organe de régulation possède au moins trois états :
- dans le premier état, aucune ressource ne peut être consommée ;
- dans le second état, la ressource peut être consommée jusqu'à concurrence d'une première limite de débit ;
- dans le troisième état, la ressource peut être consommée jusqu'à concurrence d'une seconde limite de débit, la seconde limite étant
strictement supérieure à zéro et strictement inférieure à la première limite. Par exemple, selon un exemple de réalisation non limitatif, dans le cadre d'un réseau de distribution d'électricité, l'organe de régulation comprend un coupe-circuit ('breaker' en anglais) ou équivalent. Le premier état correspond alors à un coupe-circuit ouvert, le second état à un coupe-circuit fermé et le troisième état à un coupe-circuit qui est fermé dans un premier temps mais qui est ouvert en cas de dépassement de la seconde limite de puissance.

Dans le troisième état, c'est l'organe de régulation qui va mesurer la puissance consommée et ouvrir le circuit en cas de dépassement de la seconde limite, soit immédiatement, soit - selon une variante - après une durée donnée au-dessus de la seconde limite.

Le comportement dans le troisième état est généralement similaire à celui dans le second état, mais les limites utilisées diffèrent selon l'état.

Dans le cas de réseaux distribuant des volumes de ressources (eau, gaz), l'organe de régulation comprend par exemple une valve, pouvant être ouverte (donnant accès à un débit maximal) ou fermée (aucune ressource ne peut être consommée), ou dans un état d'ouverture ou de fermeture partielle, correspondant au troisième état mentionné ci-dessus.

La tête de réseau 110 est configurée pour remplir des fonctions décrites ci-dessous, soit de façon autonome, soit en coopération avec des dispositifs ou systèmes avec lesquels la tête de réseau peut communiquer. La FIG. 1 montre à titre d'exemple un réseau de communication 101, par exemple un réseau IP tel qu'un VPN ou Internet, dont la tête de réseau 110 fait partie.

Selon l'exemple de réalisation non limitatif de la FIG.1, le réseau 101 comprend notamment un serveur de gestion de données compteur 112 ('MDMS' pour 'Meter Data Management System en anglais), un serveur de paiement 114, un serveur 115 de gestion de clés ('KMS' pour Key Management Services' en anglais) de prépaiement et un serveur de gestion 116 de clés compteur, lui aussi KMS. Les fonctions de ces quatre entités peuvent être regroupées de diverses façons sur une ou plusieurs plateformes matérielles communes, y compris avec la tête de réseau 110. L'architecture de la FIG. 1 correspond à une architecture typique, notamment de par la séparation des serveurs de clés des autres entités, mais d'autres implémentations sont bien évidemment possibles.

Selon l'exemple illustré dans la FIG. 1, le serveur de paiement 114 interagit avec des dispositifs des clients (non illustrés sur la FIG. 1) pour recevoir des paiements d'achat de crédit de ressource. Le serveur de paiement a accès pour chaque client à une clé mise à disposition par le serveur de gestion de clés de prépaiement 115. Cette clé est également connue du dispositif du client et est utilisée par le dispositif client pour chiffrer les messages à destination du serveur de paiement. Ce dernier peut déchiffrer un message reçu du dispositif d'un client grâce à la clé adéquate. Les dispositifs des clients sont par exemple des ordinateurs, tablettes, téléphones portables exécutant une application adaptée. Le serveur de données compteur 112 maintient en mémoire le niveau de crédit de chaque client et le cas échéant met à jour ses données sur base de messages du serveur de paiement 114 représentatif du paiement d'un client. Un client détient un compte auprès du serveur de paiement 114 qu'il peut ainsi créditer.

Les données de crédit seront désignées par C_K dans ce qui suit, où C_K est le niveau de crédit non consommé pour le compteur K, c'est-à-dire le crédit disponible. Dans l'exemple de la FIG. 1, les niveaux de crédit sont transmis par la tête de réseau 110 qui les transmet au dispositif 102. Le serveur de gestion de clés compteur 116 maintient une clé pour chaque compteur, les clés de compteur étant communiquées par la tête de réseau au dispositif 102.

Une clé d'un compteur K est utilisée par le dispositif 102 pour échanger des informations de façon sécurisée avec le compteur K. Un compteur, qui connaît également sa clé, peut transmettre un index métrologique de consommation de la ressource au sous-répartiteur. Le sous-répartiteur peut transmettre des commandes de façon sécurisée à un compteur, par exemple l'arrêt de la distribution de la ressource (ouverture d'un organe de coupure de courant, fermeture d'une valve pour le gaz ou l'eau).

Une clé de prépaiement stockée par le serveur de gestion de clés de prépaiement 115 permet de sécuriser le prépaiement à travers un dispositif client, ce dernier ayant connaissance de la ou des clés de prépaiement du compteur associé au compte client auprès de l'application 114.

Selon la présente description, l'organe de régulation de la distribution de la ressource est adapté pour permettre une modulation de la quantité de ressource accessible par unité de temps (débit) à une valeur intermédiaire entre l'arrêt total de distribution et une première limite de débit, lorsque le solde du compte associé devient nul ou négatif. Comme indiqué précédemment, la valeur intermédiaire est également désignée par seconde limite de débit dans la présente divulgation.

Pour un réseau de distribution d'électricité, la première limite de débit est par exemple la puissance souscrite. Cette puissance souscrite est typiquement définie par le contrat d'abonnement liant le client à l'opérateur du réseau.

Pour un réseau de distribution d'eau ou de gaz, la première limite de débit est par exemple le débit correspondant à vanne complètement ouverte (débit maximal).

La valeur intermédiaire, donc la seconde limite de débit, peut être choisie de plusieurs façons. Elle peut par exemple être un pourcentage strictement supérieur à 0% et strictement inférieur à 100% de la première limite de débit.

Le pourcentage peut par exemple être choisi pour que la valeur intermédiaire représente une fraction donnée de la consommation moyenne du client. Cela permettra certains usages de la ressource, mais pas tous les usages. Cela a pour effet d'inciter le client à régulariser sa situation de crédit négatif.

Dans le cas d'un réseau électrique, les puissances auxquelles un client peut souscrire peuvent être définies par un certain nombre de valeurs discrètes, la seconde limite de débit peut ainsi correspondre à une de ces puissances, inférieure à la puissance souscrite définissant la première limite de débit.

Selon un ou plusieurs modes de réalisation, le client est averti du fait que le crédit prépayé lié à son compteur est insuffisant pour couvrir la consommation indiquée par ce compteur, i.e. le solde nul ou négatif. L'avertissement peut prendre la forme d'un message texte ou d'un courrier électronique généré automatiquement, ou encore d'une signalisation sur le compteur lui-même. L'avertissement peut indiquer explicitement la seconde limite de débit. Cette seconde limite de débit peut aussi être implicite.

Le client peut ainsi gérer son utilisation de la ressource connaissant la limite imposée, par exemple en privilégiant des appareils prioritaires pour réduire la consommation d'électricité, en limitant le chauffage au gaz à une pièce pour réduire la consommation de gaz, en limitant son utilisation d'eau à des usages indispensables ... et ainsi rester sous la seconde limite de débit.

Selon une variante de réalisation applicable à un réseau de distribution d'électricité, lorsqu'un compteur est limité à une puissance correspond à la seconde limite de débit, la fourniture de courant est totalement interrompue si la consommation dépasse la seconde limite de débit.

Selon l'implémentation, cette coupure peut être effective dès le dépassement par la puissance instantanée de la seconde limite de puissance, ou après un certain temps au-dessus de la seconde limite de puissance. Dans ce dernier cas, l'organe de coupure surveille la puissance instantanée sur un intervalle de temps prédéterminé. La puissance instantanée est fournie par l'organe métrologique.

Selon un ou plusieurs modes de réalisation, lorsqu'un compteur est limité à la seconde limite de débit, la première limite de débit est rétablie dès que le client a suffisamment crédité le compte associé au compteur pour que le solde soit de nouveau positif.

Selon un mode de réalisation, le client est averti du fait que son compte est en solde positif, ainsi que du fait que la ressource est de nouveau disponible au débit nominal.

Il est à noter que les fonctionnalités d'un sous-répartiteur 102 décrites dans le cadre des exemples de réalisation peuvent, dans d'autres modes de réalisation, être intégrées à la tête de réseau 110. En effet, un sous-répartiteur est généralement mis en œuvre dans des réseaux de distribution d'électricité ou de gaz, mais rarement dans le cadre d'un réseau de distribution d'eau.

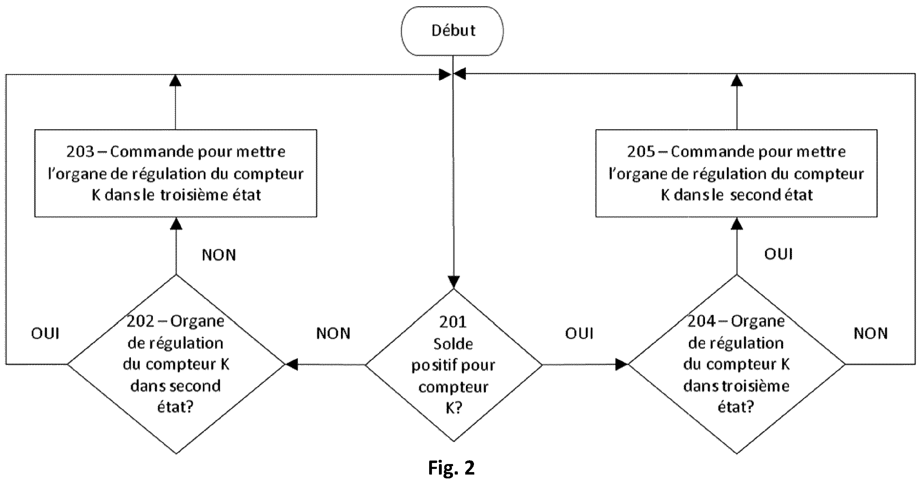

La figure 2 est un algorigramme d'une méthode selon un mode de réalisation non limitatif. La méthode peut être mise en œuvre par le dispositif 102, qui est idéalement placé entre la tête de réseau et les compteurs et peut ainsi aisément commander ces derniers. La méthode peut cependant être mise en œuvre par un autre appareil du réseau de distribution. La personne du métier saura adapter cette méthode selon l'architecture du réseau de distribution et le dispositif la mettant en œuvre.

Le dispositif 102 détermine (en 201) si le solde, autrement dit le crédit prépayé disponible pour un compteur K auquel est soustrait la consommation enregistrée par ce compteur, est strictement positif ou non. Le solde indique si un client a consommé exactement ce qu'il a payé par avance (solde nul) ou qu'il a consommé plus que ce qu'il a payé par avance (solde négatif).

Si le solde est nul ou négatif, le dispositif 102 va faire en sorte que l'organe de régulation du compteur passe dans le troisième état. Selon l'exemple de réalisation de la FIG. 2, le dispositif 102 va vérifier en 202 si le compteur K est dans le second état, c'est-à-dire qu'il fonctionne à sa limite nominale de débit (première limite). Si c'est le cas, alors un message est transmis en 203 par le dispositif 102 au compteur K pour que l'organe de contrôle de ce compteur soit mis dans le troisième état. Cette vérification de l'état actuel de l'organe de régulation est effectuée pour éviter d'envoyer un message de changement vers le troisième état alors que cet organe est déjà dans cet état.

Selon une variante de réalisation (non-illustrée), la vérification en 202 n'est pas effectuée et le message en 203 est envoyé systématiquement.

L'état actuel est par exemple un état mémorisé par le dispositif 102 lors d'une itération précédente de la méthode de la FIG. 2. Alternativement, cet état peut être obtenu de la part du compteur concerné suite à une requête du dispositif 102. La méthode reboucle vers 201 à la sortie de 202 et 203 pour vérifier à nouveau le solde, sachant que le client a pu recréditer son compte entretemps.

Si le solde est positif en 201 et que l'organe de régulation est dans le troisième état (vérification positive en 204), alors le sous-répartiteur transmet un message au compteur K pour que ce dernier change l'état de l'organe de contrôle vers le second état, permettant de nouveau une consommation au débit nominal (coupe-circuit fermé, vanne ouverte au maximum). Sinon, la méthode reboucle pour vérifier à nouveau le solde en 201. La situation arrive lorsqu'une fois le débit limité suite à un solde négatif ou nul, un paiement est effectué qui permet au solde de redevenir positif.

Un solde négatif est possible dans la mesure où un compteur ne détermine pas lui-même s'il reste un crédit à consommer, mais que cette tâche est déléguée au dispositif 102, qui peut recevoir les informations relatives au crédit prépayé d'une part et à la consommation effective de la ressource de manière asynchrone et donc commander une limitation du débit alors que le crédit prépayé est déjà dépassé.

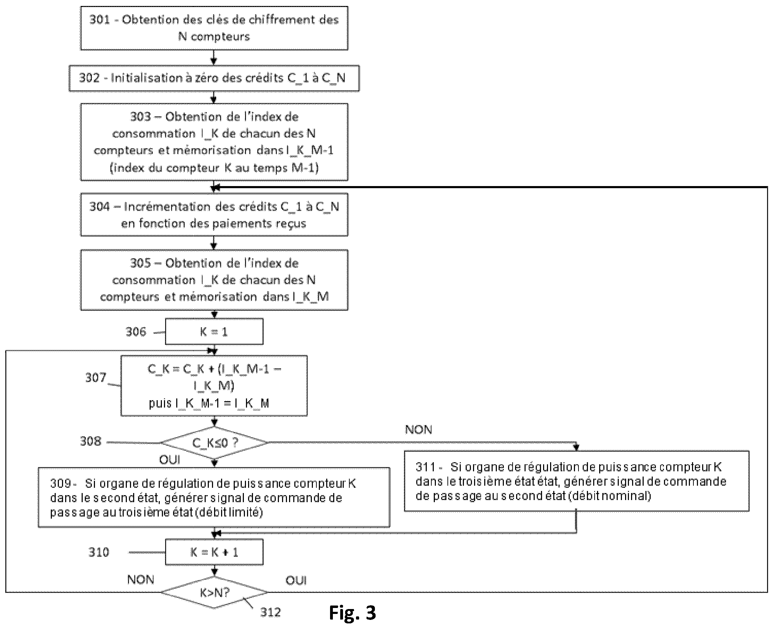

La figure 3 est un algorigramme plus détaillé d'une méthode selon la figure 2, en référence à certains éléments de la figure 1.

En 301, le dispositif 102 obtient les clés de chiffrement des N compteurs 103_1 à 103_N qui lui ont été assignés. En 302, les crédits disponibles C_1 à C_N associés à chacun de ces compteurs sont initialisés à zéro. Ceci est vu du dispositif 102. En 303, l'index de consommation de chaque compteur au temps M-1, I_K_M-1, est obtenu des compteurs (K variant de 1 à N). Le crédit disponible pour chaque compteur est incrémenté en fonction de paiements reçus tels que communiqués en 304 au dispositif 102 par la tête de réseau 110.

Des index de consommation, I_K_M, au temps M, plus récent que le temps M-1, sont obtenus en 305 pour l'ensemble des compteurs.

Pour chaque compteur K:
- Le crédit disponible C_K est ajusté en 307 en en retirant la consommation du compteur K entre les temps M-1 et M - il s'agit là du solde.
- On garde également en mémoire, pour chaque compteur K, l'index de consommation I_K_M, cet index devenant l'index I_K_M-1 pour la prochaine itération.
- On vérifie en 308 si le solde est ou non inférieur ou égal à 0.
   ∘ Si c'est le cas et que l'organe de régulation de puissance du compteur K est dans le second état (débit à la première limite, soit le débit nominal), alors le dispositif 102 génère en 309 un message de commande à destination du compteur K pour changer l'état de l'organe de régulation vers le troisième état (débit à la seconde limite, inférieure à la première limite).
   ∘ Si ce n'est pas le cas, et que l'organe de régulation de puissance du compteur K est dans le troisième état, alors le sous-répartiteur génère en 311 un message de commande à destination du compteur K pour changer l'état de l'organe de contrôle vers le second état.
- L'indice du compteur est incrémenté à K+1 en 310, et la boucle continue jusqu'à ce que les N compteurs aient été revus (vérification en 312), après quoi la méthode reprend en 304 avec la mise à jour des index de consommation et des crédits.

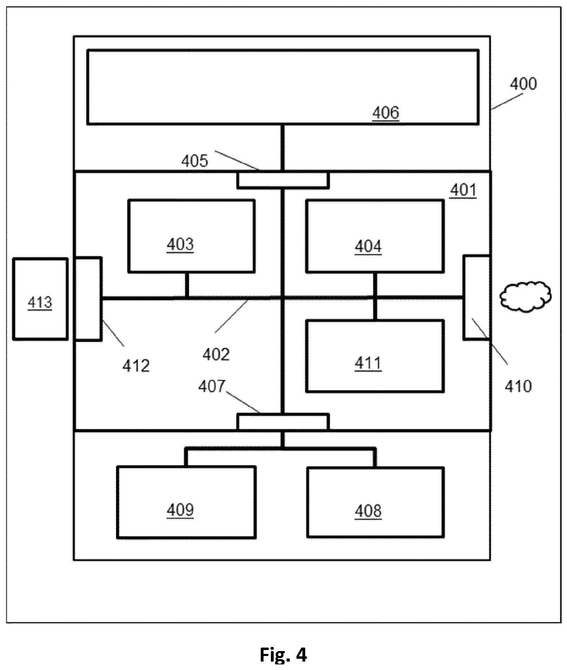

Le dispositif mettant en œuvre la méthode divulguée peut par exemple être implémenté sous la forme d'un dispositif tel que représente par la figure FIG.4. Ce dispositif référencé 400 comprend une carte de circuit imprimé 401 sur laquelle un bus de communication 402 relie un processeur 403, une mémoire vive 404, un support de stockage 411, éventuellement une interface 405 pour connecter un écran 406, une série de connecteurs 407 pour connecter des dispositifs ou des modules d'interface utilisateur tels qu'une souris ou un pavé tactile 408 et un clavier 409, une ou plusieurs interfaces de réseau sans fil 410 et/ou une ou plusieurs interfaces de réseau filaire 412. Selon les fonctionnalités requises, notamment selon que le dispositif 400 est utilisé dans une tête de réseau 110 ou un sous-répartiteur 102 le dispositif peut ne mettre en œuvre qu'une partie de ce qui précède. Par exemple, certains modules de la figure FIG.4 peuvent être internes ou connectés à l'extérieur, auquel cas ils ne font pas nécessairement partie intégrante du dispositif lui-même. Par exemple, l'écran 406 peut être un écran qui n'est connecté au dispositif 400 que dans des circonstances spécifiques, ou le dispositif 400 peut être contrôlé par un autre appareil doté d'un écran, et dans ce cas le dispositif 400 ne comporte aucun écran 406 ni aucune interface 405.

La mémoire 411 contient un ou plusieurs codes logiciels qui, lorsqu'ils sont exécutés par le processeur 403, permettent, selon l'implémentation, à la tête de réseau 110 ou au sous-répartiteur d'exécuter la méthode de gestion décrite ici. Dans un mode de réalisation donné à titre d'exemple, un support de stockage amovible 413, tel qu'une clé USB, peut également être connecté. Par exemple, le support de stockage détachable 413 peut contenir les codes logiciels à télécharger dans la mémoire 411.

Le processeur 403 peut être n'importe quel type de processeur tel qu'une unité centrale de traitement ("CPU") ou un microprocesseur dédié tel qu'un microcontrôleur intégré ou un processeur de signal numérique ("DSP").

Le dispositif 400 peut également comprendre d'autres composants que l'on trouve généralement dans les systèmes informatiques, tels qu'un système d'exploitation, des gestionnaires de file d'attente, des pilotes de périphériques ou un ou plusieurs protocoles de réseau qui sont stockés dans la mémoire 411 et exécutés par le processeur 403.

Le dispositif 400 peut également être utilisé pour implémenter un compteur, en y intégrant un organe de régulation 105_K et un organe métrologique 104_K.

Selon un mode de réalisation, l'organe de régulation comprend un processeur, du code logiciel exécuté par le processeur, et un composant de régulation 117_K de débit proprement dit (coupe-circuit, valve...). Des signaux de commande du composant de régulation de débit sont générées par le processeur lorsqu'il exécute le logiciel. Le processeur de l'organe de régulation peut être le processeur 403. Le code logiciel peut être stocké dans la mémoire 411.

Selon les besoins et la nature du compteur, certains composants peuvent être retirés et d'autres ajoutés.

Les personnes du métier comprendront que tous les schémas fonctionnels présentés ici représentent des vues conceptuelles, données à titre d'exemple, de circuits incorporant les principes de la divulgation.

Chaque fonction, bloc, étape décrit peut être mis en œuvre dans du matériel, des logiciels, des microprogrammes, des intergiciels, des microcodes ou toute combinaison appropriée de ceux-ci. S'ils sont mis en œuvre dans un logiciel, les fonctions ou blocs des schémas fonctionnels et des algorigrammes peuvent être mis en œuvre par des instructions de programme d'ordinateur/codes de logiciel, qui peuvent être stockés ou transmis sur un support lisible par ordinateur, ou chargés sur un ordinateur à usage général, un ordinateur à usage spécial ou un autre appareil de traitement programmable et/ou un système, de sorte que les instructions de programme d'ordinateur ou les codes de logiciel qui s'exécutent sur l'ordinateur ou un autre appareil de traitement programmable, créent les moyens de mettre en œuvre les fonctions décrites dans la présente description.

Bien que les aspects de la présente divulgation aient été décrits en référence à des réalisations particulières, il convient de comprendre que ces réalisations ne font qu'illustrer les principes et les applications de la présente divulgation. Il est donc entendu que de nombreuses modifications peuvent être apportées aux modes de réalisation illustratifs et que d'autres arrangements peuvent être conçus sans s'écarter de l'esprit et de la portée de la divulgation tels que déterminés sur la base des revendications et de leurs équivalents.

Les avantages et les solutions aux problèmes ont été décrits ci-dessus en ce qui concerne des modes de réalisation spécifiques de l'invention. Cependant, les avantages, les bénéfices, les solutions aux problèmes, et tout élément qui peut causer ou résulter en de tels avantages, bénéfices ou solutions, ou causer de tels avantages, bénéfices ou solutions à devenir plus prononcés ne doivent pas être interprétés comme une caractéristique ou un élément critique, requis, ou essentiel de l'une ou de l'ensemble des revendications.

### Liste des signes de référence

100 - Réseau de distribution de ressource prépayée
101 - Réseau de communication
102 - Sous-répartiteur ou Concentrateur de données
103_K - Compteur de ressource K
104_K - Organe métrologique du compteur K
105_K - Organe de régulation de ressource du compteur K
106_K - Interface de communication du compteur i
107 - Interface de communication du sous-répartiteur
108 - Interface de communication du sous-répartiteur
109 - Réseau de communication tête de réseau - sous-répartiteur
110 - Tête de réseau
111 - Interface de communication de la tête de réseau
112 - Système de gestion des données des compteurs
113 - Réseau de communication sous-répartiteur - compteurs
114 - Application de prépaiement
115 - Système de gestion de clés de prépaiement
116 - Système de gestion de clés compteurs
117_K - Composant de régulation du compteur K
400 - Dispositif
401 - Carte de circuit imprimé
402 - Bus de communication
403 - Processeur
404 - Mémoire vive
405 -Interface
406 - Ecran
407 - Connecteurs
408 - Souris
409 - Pavé tactile
410 - Interface sans fil
411 - Support de stockage
412 - Interface de réseau filaire
413 - Support de stockage amovible

## Revendications

1. Dispositif (103_K) compteur de consommation d'une ressource adapté à un réseau de distribution (100) de la ressource avec prépaiement, le compteur comportant :
- un processeur (403);
- un organe métrologique (104_K) configuré pour compter la quantité consommée de la ressource ;
- un organe de régulation (105_K) apte à être commandé pour avoir un parmi trois états, dont :
• un premier état bloquant la consommation de la ressource,
• un second état autorisant la consommation de la ressource jusqu'à une première limite de débit; et
• un troisième état autorisant la consommation de la ressource jusqu'à une seconde limite de débit, la seconde limite étant supérieure à zéro et inférieure à la première limite ;
- une interface de communication (106_K) configurée pour
• transmettre une information représentative de la quantité consommée de la ressource ; et
• recevoir un message de commande de l'état de l'organe de régulation ;
le processeur étant configuré pour changer l'état de l'organe de régulation en réponse au message reçu,
la ressource étant de l'électricité, le débit étant une puissance et la première limite de débit étant une puissance souscrite auprès d'un fournisseur d'électricité, le processeur étant configuré pour, lorsque l'organe de régulation est dans le troisième état et qu'un débit de ressource consommée est supérieur à la seconde limite de débit, changer l'état de l'organe du troisième état vers le premier état.

2. Dispositif selon la revendication 1, la transmission de l'information représentative de la quantité consommée de la ressource étant effectuée vers un autre dispositif (102), le message étant reçu de cet autre dispositif, l'autre dispositif étant l'un parmi un sous-répartiteur ou un concentrateur de données du réseau de distribution électrique.

3. Dispositif selon l'une des revendications 1 ou 2, le changement d'état de l'organe du troisième état vers le premier état étant effectif
- dès le dépassement de la seconde limite de puissance par la puissance instantanée consommée, ou
- après un certain temps passé par la puissance instantanée consommée au-dessus de la seconde limite de puissance.

4. Méthode mise en œuvre par un dispositif compteur (103_K) dans un réseau de distribution (100) d'une ressource prépayée, le dispositif compteur comprenant :
- un processeur (403) ;
- un organe métrologique (104_K) configuré pour compter la quantité consommée de la ressource ;
- un organe de régulation (105_K) apte à être commandé pour avoir un parmi trois états, dont :
• un premier état bloquant la consommation de la ressource,
• un second état autorisant la consommation de la ressource jusqu'à une première limite de débit; et
• un troisième état autorisant la consommation de la ressource jusqu'à une seconde limite de débit, la seconde limite étant supérieure à zéro et inférieure à la première limite ;
- une interface de communication adaptée à communiquer avec un dispositif (102) de gestion de compteurs, la méthode comprenant :
- la transmission au dispositif de gestion de compteurs d'une information représentative de la quantité consommée de la ressource comptée par l'organe métrologique;
- la réception d'une commande de l'état de l'organe de régulation de la part du dispositif de gestion de compteurs;
- le changement de l'état de l'organe de régulation en réponse au message reçu, la ressource étant de l'électricité, le débit étant une puissance et la première limite de débit étant une puissance souscrite auprès d'un fournisseur d'électricité, la méthode comprenant en outre :
- lorsque l'organe de régulation est dans le troisième état et qu'un débit de ressource consommée est supérieur à la seconde limite de débit, un changement de l'état de l'organe du troisième état vers le premier état.

5. Méthode selon la revendication 4, la transmission de l'information représentative de la quantité consommée de la ressource étant effectuée vers un autre dispositif (102), le message étant reçu de cet autre dispositif, l'autre dispositif étant l'un parmi un sous-répartiteur ou un concentrateur de données du réseau de distribution électrique.

6. Méthode selon l'une des revendications 4 ou 5, le changement d'état de l'organe du troisième état vers le premier état étant effectif
- dès le dépassement de la seconde limite de puissance par la puissance instantanée consommée, ou
- après un certain temps passé par la puissance instantanée consommée au-dessus de la seconde limite de puissance.

7. Produit programme d'ordinateur comportant des instructions qui lorsqu'elles sont exécutées par au moins un processeur causent la mise en œuvre de la méthode selon l'une des revendications 4 à 6.

8. Support de stockage non transitoire lisible par un ordinateur comportant des instructions qui lorsqu'elles sont exécutées par un processeur causent la mise en œuvre de la méthode selon l'une des revendications 4 à 6.
